# EUROPEAN PATENT APPLICATION

(11) **EP 3 689 720 A1**
(43) Date of publication of application: **05.08.2020**
(21) Application number: 20154161.2
(22) Date of filing: 28.01.2020
(51) Int. Cl.: B62D 63/02, B25J 9/16, B60D 1/07

(54) **MOBILE ROBOTS HAVING MECHANICAL AND DATA COUPLING MECHANISMS**

(30) Priority: 31.01.2019 GB 201901339
(71) Applicant: Arrival Robotics Ltd, London W14 8TS (GB)
(72) Inventor: FAIRCLOUGH, Jamie, London W14 8TS (GB)
(74) Representative: Korenberg, Alexander Tal

(57) **Abstract**

Automatic guided vehicles (AGVs) have couplings which allow multiple AGVs to be coupled to each other so that the AGV assembly can move in a coordinated manner. Each side of the AGV can have physical couplings which each have a convex coupling and a concave coupling. The AGVs move next to each other so the concave couplings are aligned with the convex couplings and the AGVs move towards each other. The convex couplings are inserted into the concave couplings. The concave couplings have T bars and when the couplings are connected, the distal ends of the T bars are inserted through the horizontal slots in the convex couplings. Once fully inserted, the T bars are rotated so that the elongated distal ends are out of alignment with the slots, locking the convex couplings to the concave couplings.

## Description

### FIELD OF INVENTION

The field of invention is a in robotic manufacturing system.

### BACKGROUND

In a robotic manufacturing system, automatic guided vehicles (AGVs) can be used to transport components and assembled devices. AGVs can be bespoke machines that can move autonomously in industrial environments, such as a warehouse or factory. They are typically tasked with moving items around, such as warehouse stock or inventory. AGVs can be portable robots that follow markers or wires in the floor, or uses vision, magnets, or lasers for navigation. AGVs can be used in industrial applications to move materials around a manufacturing facility or warehouse. AGVs can require a high degree of automation and flexible manufacturing systems, there is a number of requirements to automated logistics and delivery methods within the workshop: low-cost, high reliability, flexibility of the AGV system.

In some situations, a single AGV can be used to transport the components and assembled devices. However, in other situations the components or assembled devices can be too large for a single AGV to perform the transportation. It can be useful to use multiple AGVs to transport these larger structures. What is needed is a system which allows multiple AGVs to be coupled so that the AGVs can communicate and coordinate movements to transport the larger components or assembled devices.

### SUMMARY OF THE INVENTION

AGVs are used to transport components and/or assembled structures. The AGVs may use omnidirectional wheels. For example, in different embodiments, the AGVs can include Mecanum or Ilon wheels which can allow the AGV to move in any direction over the ground. If Mecanum wheel locomotion systems are in place on each AGV, it is possible for the connected AGVs to form any assembled shape and for the connected AGVs to move homogeneously as a single structure around the ground or warehouse environment.

There are several general requirements for the AGV universal connection mechanism. For example, to assure reliable AGV mechanical connections, the coupling mechanisms should guarantee AGV connection tightness. In working environments, it can be difficult to align the positions of two AGVs to couple and electrically connect them accurately. The design of the inventive connection mechanism can provide alignment assistance to assure self-alignment between the adjacent AGVs in some extent.

An AGV can be any shape, such as square or rectangular with one or more coupling mechanisms on each vertical side surface of the AGV. The coupling mechanisms can include a concave coupling which is spaced apart horizontally and vertically aligned with a convex coupling. The concave coupling can have locking mechanism which can secure the convex coupling mechanism to the concave coupling mechanism. In an embodiment, the convex coupling mechanism can be a convex cylindrical structure with a conical portion and the concave coupling is a concave cylindrical structure with internal surfaces which can be the mirror reversed surfaces of the convex coupling surfaces. In other embodiments, the concave and convex couplings' surfaces can be spherical, elliptical, or another tapered structure where the distal portion is thinner than the proximal portion.

In an embodiment, the locking mechanism can be a rotational locking T bar which can fit within a corresponding slot in the convex coupling. The locking T bar can be rotated between an unlocked rotational position and a locked rotational position. For example, the slot may be in a horizontal alignment so that when the T bar is in the horizontal position in the unlocked position the convex coupling can be inserted and removed from the concave coupling. However, when the T bar in the horizontal position is fully inserted into the horizontal slot and the T bar extends into an open volume behind the horizontal slot and is rotated a predetermined rotational angle, such as an angle between 45 to 135 degrees or 90 degrees, such that the T bar is rotated to be out of alignment with the slot, the T bar will no longer be aligned with the horizontal slot and the convex coupling will be locked within the concave coupling.

In other embodiments, the slot locking mechanism can have various other configurations. For example, the slot can be vertically or diagonally aligned. In other embodiments, the T bar can be stationary and the entire convex connector can rotate about the center axis once the T bar has been inserted into the slot in the end of the convex connector. In yet another embodiment, the T bar can be coupled to the convex connector and the corresponding slot can be formed in the concave connector. In an embodiment, the inner surface of the slot can be ramped so that the rotation of the T bar can cause the convex connector to be more tightly pulled into the concave connector when the T bar is rotated into a locked position.

An electrical actuator can control the rotational position of the rotational locking T bar. In an embodiment, the actuator can be coupled to an arm which extends radially outward from the center axis of the T bar. The actuator can have a solenoid which contracts the actuator when electrical power is applied and a spring which extends the actuator when electrical power is not applied. In an embodiment, the locked state of the connection mechanism may not require power applied to the electrical actuator. In other embodiments, the actuator can be oppositely configured and when power is applied to the actuator the T bar can rotate into the locked position and when power is removed from the actuator the T bar can rotate into the unlocked position and in the event of a power failure, the AGVs can be separated because the couplings will inherently be unlocked.

Besides the mechanical connection, a data transmission connection mechanism can be provided between vehicles. Wireless means of communication are not always reliable, in some use-cases wired connection is the more reliable option for providing electrical data and/or power connections between coupled AGVs. In an embodiment, the electrical connection mechanism can be positioned between the concave and convex coupling mechanisms.

The inventive AGV system can be used as a trailer for towing objects. In some embodiments, the AGV might play the role of an object carrying platform or several AGVs might be joined by some constructive hard elements to perform actions in a specified manner. There are several designs of the AGVs to solve the problem of carrying heavyweight loads. To transport heavy objects, often relatively big and complex AGVs are used. However, the couplings can be used to create coupled AGV assemblies having multiple connected AGVs to perform heavyweight operations. The AGVs mechanical and data coupling allows an infinite number of AGVs to be connected to each other through the rigid mechanical connection and function as a unitary AGV transportation mechanism.

### BRIEF DESCRIPTIONS OF THE DRAWINGS

FIG. 1 illustrates a perspective view of an embodiment of an AGV with couplings.
FIG. 2 illustrates a perspective view of an embodiment of a coupling on a side surface of an AGV.
FIG. 3 illustrates a top view of an embodiment of two uncoupled AGV couplings.
FIG. 4 illustrates a top view of an embodiment of two coupled AGV couplings.
FIG. 5 illustrates a perspective side view of an embodiment of an AGV coupling with a T bar in an unlocked position.
FIG. 6 illustrates a perspective side view of an embodiment of an AGV coupling with a T bar in a locked position.
FIG. 7 illustrates a perspective side view of an embodiment of an T bar actuator in an unlocked position.
FIG. 8 illustrates a perspective side view of an embodiment of two adjacent coupling mechanisms with T bars in unlocked positions.
FIG. 9 illustrates a perspective side view of an embodiment of two engaged coupling mechanisms with T bars in unlocked positions.
FIG. 10 illustrates a perspective side view of an embodiment of two engaged coupling mechanisms with T bars in locked positions.
FIGS. 11, 12 and 13 illustrate coupled AGVs in different assembled configurations.

### DETAILED DESCRIPTION

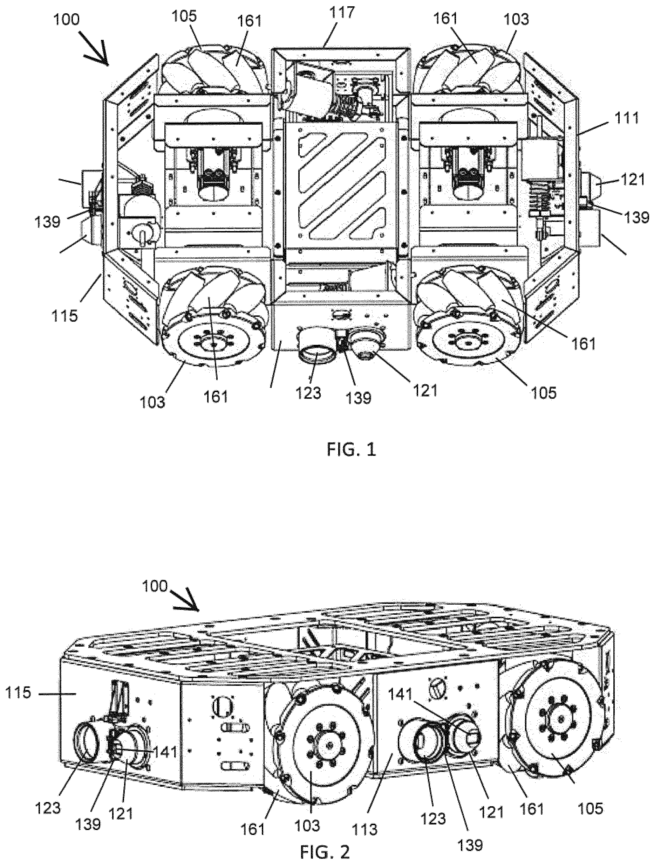

The present invention is directed towards a mechanical and data coupling system for automated guided vehices (AGVs). With reference to FIG. 1, an embodiment of an AGV 100 is illustrated which can include four wheels 103, 105, a front side 111, a right side 113, a rear side 115, and a left side 117. A data coupling 139 and a mechanical coupling having a convex connector 121 and a concave connector 123 are mounted on the centers of the front side 111, the right side 113, the back side 115, and the left side 117.

The wheels 103, 105 can have special rolling mechanisms which can allow the AGVs 100 to move in any direction, forward, backwards and side to side. For example, in an embodiment, the wheels 103, 105 can be Mecanum wheels or Ilon wheels which are wheels with a series of rollers 161 attached to the circumferences of the wheels 103, 105. These rollers 161 can each have an axis of rotation at 45° to the rotational plane of the wheels 103, 105 and at 45° to a line through the center of the roller 161 parallel to the axis of rotation of the wheels 103, 105. The AGVs 100 can have an alternating arrangement of wheels 103, 105. Wheels 103 with left-handed rollers 161 on the front left and rear right sides of the AGV 100 and wheels 105 with right-handed rollers 161 on the front right and rear left sides of the AGV 100. Each wheel 103, 105 can apply a force roughly at right angles to the forward center axis. By controlling the rotations of the wheels 103, 105 and the rollers on the wheels 103, 105, the AGV 100 is stable and can be made to move in any direction. Moving all four wheels 103, 105 in the same direction causes forward or backward movement. In contrast, running the wheels 103, 105 on one side of the AGV 100 in the opposite direction to the wheels 103, 105 on the other side causes rotation of the AGV 100, and running the wheels 103, 105 on one diagonal in the opposite direction to those on the other diagonal causes sideways movement of the AGV 100. Combinations of these wheel motions allow for AGV 100 motion in any direction in translation and rotation. Because the AGVs 100 can move in any direction, the AGVs 100 can easily move to be coupled to each other.

With reference to FIG. 2, the right side 113 and rear side 115 of the AGV 100 are illustrated which shows a more detailed illustration of an embodiment of the mechanical coupling with the convex connector 121 and the concave connector 123. In the illustrated embodiment, the convex connector 121 has a horizontal slot 141 which is an entrance to a hollow inner volume. When facing the side of the AGV 100, the convex connector 121 is to the right of the concave connector 123 and separated by a fixed predetermined distance. The convex connector 121 and the concave connector 123 are oriented at the same vertical height from the ground. When the AGVs 100 are in the same forward facing rotational alignment, the AGVs 100 can be coupled to each other with the couplings 121, 123 on the front side 111 of the AGV 100 can be coupled to the couplings 121, 123 on the rear side 115 of the adjacent AGV 100. Similarly, the couplings 121, 123 on the right side 113 of the AGV 100 can be coupled to the couplings 121, 123 on the left side 117 of the adjacent AGV 100. Thus, the AGVs 100 can be coupled in any geometric assembled configuration.

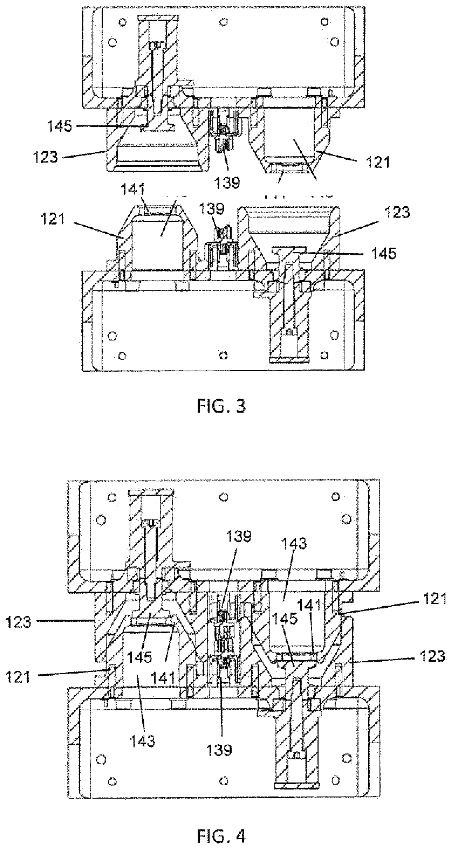

With reference to FIG. 3 a drawing of aligned couplings 121, 123 is illustrated and with reference to FIG. 4 a drawing of the convex couplings 121 with the elongated distal ends of the T bars 145 aligned and within the horizontal slots 141 of the convex couplings 121 is illustrated. The convex couplings 121 can be convex conical in shape with a proximal portion being a cylindrical structure and a flat planar end which can be perpendicular to the center axis of the convex coupling 121. The planar end can have an opening which in this embodiment is a horizontal slot 141 which provides a passageway to the interior volume 143. The angle of the conical surface can be between 20 and 70 degrees.

The concave coupling 123 can have concave surfaces formed within a cylindrical structure. A center portion of the concave coupling 123 can be concave cylindrical in shape and a proximal portion of the concave coupling 123 can have a concave cylindrical surface with a conical angle which corresponds with the convex conical angle of the convex coupling 121. The T bar 145 can be mounted to the center portion of the concave coupling 123. The concave couplings 123 can have a center T bar 145 which can have an elongated distal end coupled to a center rod. The elongated distal end can rotate about the center rod between locked and unlocked positions.

Although the convex couplings 121 and concave couplings 123 have been described as having cylindrical and conical surfaces, in other embodiments, these structures can have other geometric shapes. For example, the convex couplings 121 can have convex spherical, elliptical, or other tapered structures where the distal portion is thinner than the proximal portion and the convex couplings 121 can have corresponding concave spherical, elliptical, or other tapered structure where the proximal portion is thinner than the distal portion.

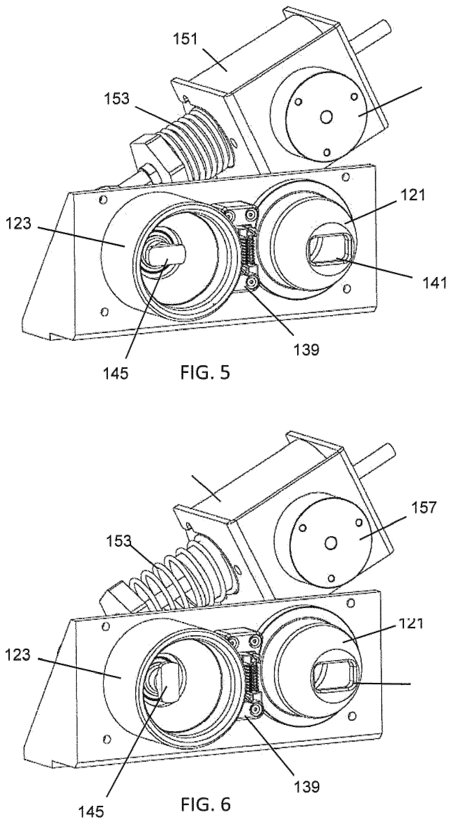

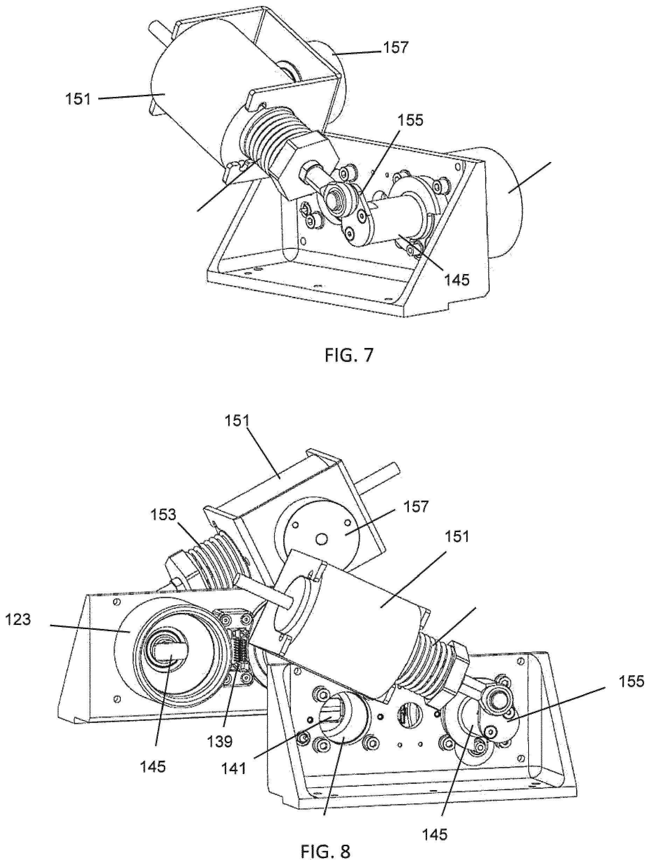

With reference to FIGS. 5 - 7, perspective views of the convex coupling 121, the concave coupling 123 and the data coupling 139 are illustrated. With reference to FIG. 5, a front perspective view shows the T bar 145 of the concave connector 123 is in the horizontal position. The T bar 145 can be coupled to an actuator 151 which can be an electromagnetic linear actuator which can retract the actuator 151 when electrical power is applied. The actuator 151 can be coupled to a spring 153 which can extend the actuator 151 when power is removed. The actuator 151 is powered and the spring 153 is contracted. With reference to FIG. 7, a rear perspective of the concave coupling 123 with an arm 155 coupled to the proximal end of the T bar 145. In the illustrated configuration, the actuator 151 is attached to a rotational mount 157 and coupled to the arm 155. The actuator 151 is in a contracted state with electrical power applied and the spring 153 contracted. With reference to FIG. 6, when power is not applied to the actuator 151, the spring 153 will expand and the actuator 151 will expand and move the arm 155 so that the T bar 145 rotates into a locked position with the distal elongated portion rotated into a vertical orientation. Thus, the convex coupling 121 will fail with the T bar 145 in the locked position. In other embodiments, the actuator 151 can be configured with the actuator 151 in the locked position when electrically powered and the actuator 151 can rotate the arm 155 and the T bar 145 into an unlocked position when power is removed from the actuator 151.

With reference to FIG. 8, a perspective view of two adjacent and aligned couplings 121, 123 is illustrated. The elongated distal end of the T bar 145 of the concave coupling 123 is in an unlocked horizontal position in alignment with the horizontal slot 141 of the adjacent convex coupling 121. Both of the illustrated actuators 151 are in the powered state with the springs 153 in the compressed states. The arms 155 are rotated to move the T bar 145 to the unlocked positions.

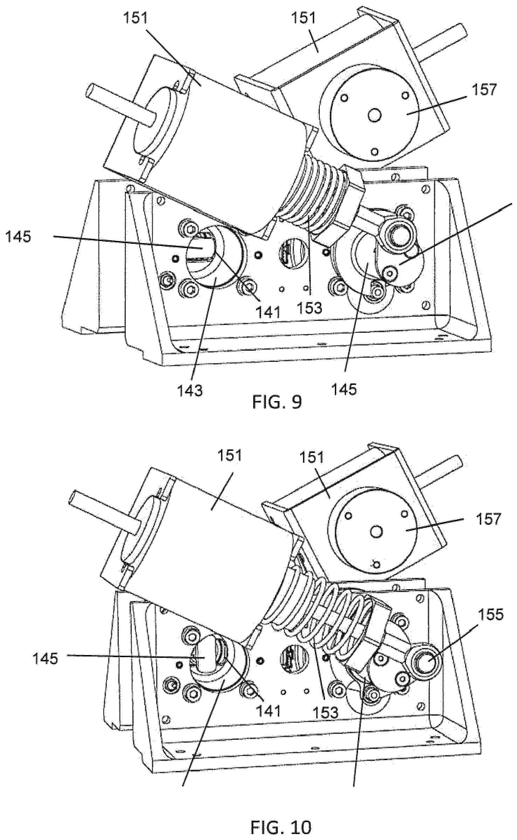

With reference to FIG. 9, a perspective view of two adjacent and aligned couplings 121, 123 is illustrated. The arms 155 are rotated to move the T bar 145 to the unlocked positions and placed within the horizontal slots 141 of the adjacent convex couplings 121. Both of the illustrated actuators 151 are in the powered state with the springs 153 in the compressed states. With reference to FIG. 10, a perspective view of two adjacent and joined couplings 121, 123 is illustrated. The convex couplings 121 are fully inserted into the concave couplings 123. The elongated distal ends of the T bar 145 are in the interior volume 143 of the convex couplings 121 and the arms 155 are rotated to move the T bar 145 to the locked positions with the elongated distal ends of the T bar 145 out of alignment with the horizontal slots 141 of the adjacent convex couplings 121. Both of the illustrated actuators 151 are in the extended unpowered state with the springs 153 in the expanded states.

FIGS. 5 - 10 utilize an actuator 151 which is coupled to an arm 155 which moves to rotate the T bar 145. However, in other embodiments, various other mechanisms can be used to control the rotational movements of the T bar 145 between locked and unlocked positions. For example in an embodiment, locking motors on the AGVs can be coupled worm screws which engage teeth on gears coupled to proximal portions of the T bar 145. Alternatively, a locking stepper motor can be coupled directly to the proximal end of the T bar 145.

In an embodiment, the inner surfaces of the convex couplings 121 facing the interior volume can have ramped surfaces which can slide against the proximal surfaces of the elongated distal ends of the T bar 145. In this embodiment, the convex couplings 121 can tighten the connections to the concave couplings 123 by further rotating the T bar 145 out of alignment with the slots. The convex couplings 121 and the concave couplings 123 can be made of a high strength hard material such as stainless steel, carbon steel, composites, or other suitable materials.

In an embodiment, the AGVs can have an automated procedure for aligning and coupling the convex couplings 121 to the concave couplings 123. The couplings are designed in such a way that the conical or tapered surfaces providing the mechanism alignment are fully aligned prior to the electrical connector 139 engagement. Only after the convex couplings 121 are at least partially inserted into the concave couplings 123 do the electrical connector mechanisms 139 come together and create an electrical connection. This means it is impossible to misalign the electrical connectors 139, because the convex couplings 121 and the concave couplings 123 mechanisms come together.

When two AGVs, equipped with convex couplings 121 and concave couplings 123 move towards each other, the initial alignment can be performed using the internal positioning control algorithm, which controls the motors driving the wheels 103, 105. The initially approached position misses are compensated by the conical shape of the convex couplings 121 and concave couplings 123, which can correct misalignments up to predetermined offsets. For example, in some designs, the alignment error can be up to 10 millimeters deviation from the alignment of the axes of the convex couplings 121 and concave couplings 123. When the T bars 145 are in the unlocked positions, the convex couplings 121 and concave couplings 123 and AGVs can join together. The two connecting AGVs tightly press the convex couplings 121 and concave couplings 123 together using the movement of the wheels 103, 105. Once the convex couplings 121 are plugged into concave couplings 123 the electrical connectors 139 are then coupled. The distal ends of the T bars 145 also pass through the slots 141 and into the interior volume 143 so the T bars 145 can rotate axially. In an embodiment, the system can only power the actuator 151 during the coupling and uncoupling processes, which can be a very short time of power consumption, to unlock the T bar 145 and, as discussed, the actuator 151 may not require power to lock the T bars 145.

To engage the locking mechanism, the actuators 141 can rotate the T bars 145 to be offset from the slots 141. For example in an embodiment, the actuator 151 can be a solenoid. When energized an electromagnetic force can be applied and the solenoid can overcome a spring force and contract the actuator 151. The contraction movement of the actuator 151 turns an arm 155 which rotates the lock T bar 145 into a horizontally oriented unlock position. Once the T bars 145 are fully inserted and the system proceeds to lock the AGVs together, the system can rotate the T bars 145 axially from a horizontal 'unlock' orientation to a 90 degrees "lock" orientation. In an embodiment, the T bars 145 can be spring loaded in a vertical 'lock' position. Once fully in position and closed face to face, the solenoids 151 are de-energized. This in turn allows the spring to rotate the lock arm 155 and the T bar 145 into the vertical lock position. Because the spring 153 force is used to turn the T bar 145 to the lock position, the mechanisms do not require any electrical energy to remain fully engaged and locked together with each other.

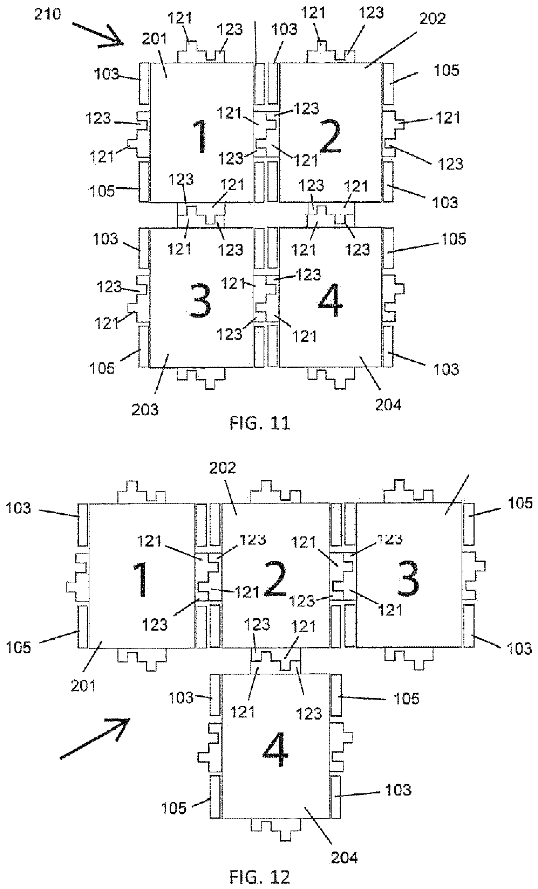

Often there are demands to create arbitrary shapes of the co-functioning AGVs 100 using the prior described coupling system. With reference to FIGS. 11 and 12, examples of coupled AGVs 100 assemblies are illustrated. FIG. 11 illustrates an assembly 210 of four AGVs 201, 202, 203, 204 coupled in a rectangular configuration and FIG. 12 illustrates four AGVs 201, 202, 203, 204 coupled in a T shaped configuration. In the illustrated assemblies, the AGVs 201, 202, 203, 204 are each in the same forward facing rotational position, the AGVs 201, 202, 203, 204 can be coupled to each other with the convex coupling 121 and the concave coupling 123 on the front side of the AGV 204 can be coupled to the convex coupling 121 and the concave coupling 123 on the rear side of the adjacent AGV 202. Similarly, the convex coupling 121 and the concave coupling 123 on the right side 113 of the AGVs 201, 202 can be coupled to the convex coupling 121 and the concave coupling 123 on the left side 117 of the adjacent AGVs 202, 203.

The adjacent AGVs 100 are each coupled with the concave couplings 123 inserted and locked into the convex couplings 121. In addition to the mechanical connections, the coupled AGVs 100 can also communicate with each other with mechanical or wireless data connections. The communications can allow the AGVs 100 to move in unison. If the AGV assembly is moving in translation all of the AGVs 100 can move in the same manner with each AGV 100 moving the wheels 103, 105 in the same direction and speed. However, if the AGV assembly moves in rotation, each AGV 100 can have different wheel movement control signals. For example, if the assembly is making a right rotational turn, the wheels 103, 105 on the left side of the AGV assembly will need to travel a further distance than the wheels 103, 105 on the right side of the AGV assembly. Thus, the wheels 103, 105 on the left side of the AGV assembly will rotate faster in a forward rotational direction than the wheels 103, 105 on the left side of the AGV assembly.

In different embodiments, different control means can be used to control the movements of the assembled AGVs. In an embodiment, the AGVs 201, 202, 203, 204 can each have a radio frequency (RF) receiver which receives RF signals for individually controlling movements of each of the AGVs 201, 202, 203, 204. In these embodiments, the controller can provide the same wheel motor control signals to each of the AGVs 201, 202, 203, 204 when the assembly is moved in translation over a surface. However, when the assembly is moving in rotation, the controller must provide different wheel motor control signals to each of the AGVs 201, 202, 203, 204 in order to turn the AGV assembly.

In other embodiments, the movement of the AGVs 201, 202, 203, 204 in the assembled configuration can be controlled by a single movement control signal. For example, the controller may simply provide the instructions to travel from point A to point B and the AGV assembly must accomplish the navigation independently. In this embodiment, at least one of the AGVs of the AGV assembly 220 can have a processor which can receive the movement control signal and then transmit the movement control signals to each of the AGVs 201, 202, 203, 204. When the control signal is to turn left, the wheels 103, 105 on the right side of the AGV assembly 220 will rotate faster in a forward rotational direction than the wheels 103, 105 on the left side.

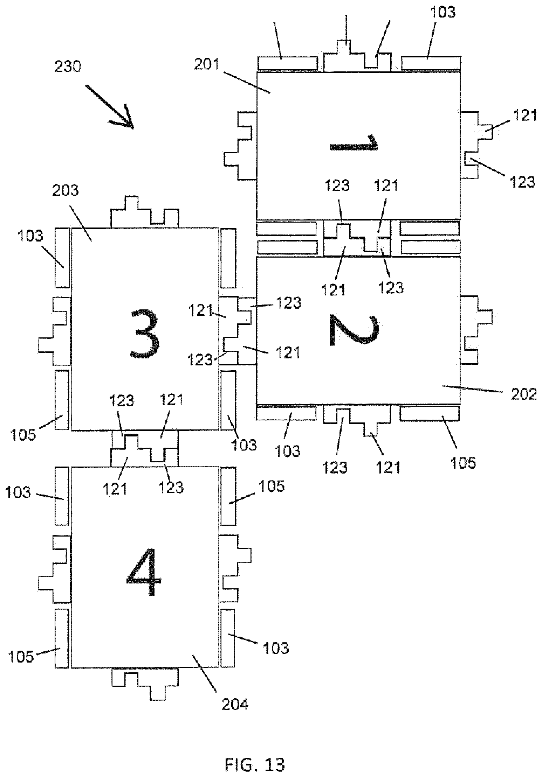

In FIGS. 11 and 12, the four AGVs 201, 202, 203, 204 are in the same orientation. However, it is possible to also couple AGVs 201, 202, 203, 204 in non-matching orientations. With reference to FIG. 13, AGVs 201, 202 are coupled to the AGVs 203, 204 in a 90 degree out of alignment configuration. More specifically, the right side of AGV 201 is coupled to the left side of AGV 202, the front of AGV 204 is coupled to the rear of AGV 203 and the right side of AGV 203 is coupled to the rear of AGV 202. AGVs 201, 202 are 90 degrees out of alignment with AGVs 203, 204. When the AGVs 201, 202 are moving forward with the wheels 103, 105 rotating normally in the same rotational direction, the AGVs 203, 204 move horizontally with the wheels 103, 105 rotating in opposite directions to facilitate the horizontal movement. As discussed, in different embodiments, the AGVs can have any number of side surfaces which can have the convex couplings 121 and the concave couplings 123. Thus, the AGVs 201, 202, 203, 204 can be coupled via the convex couplings 121 and the concave couplings 123 in any geometric assembled configuration.

The inventive coupling system has been described as being applied to coupling AGVs which are movable in all directions. In other embodiments, the inventive couplings might be used in variety of applications other than AGVs connections. For example: connecting AGVs to additional equipment, a hitch towing mechanism for an AGV, providing power to the plugged object such as an AGV, etc. The inventive AGV coupling can eliminate the need for large heavy load capacity AGVs which may not be suitable for smaller loads. By using the inventive couplings to combine the described multi-purpose AGVs, the AGV assembly can be scaled up to meet a wide variety of load transportation requirements. In other embodiments, the coupling mechanism can be used for towing other platforms, robots, and other devices equipped with the coupler. In an embodiment, the coupling mechanism might be used for providing electrical power or data links to other platforms or robots equipped with the coupler. The coupling mechanism can also be combined with any equipment, and attached by hand, like cameras, grippers, sensors etc.

The present disclosure, in various embodiments, includes components, methods, processes, systems and/or apparatus substantially as depicted and described herein, including various embodiments, subcombinations, and subsets thereof. Those of skill in the art will understand how to make and use the present disclosure after understanding the present disclosure. The present disclosure, in various embodiments, includes providing devices and processes in the absence of items not depicted and/or described herein or in various embodiments hereof, including in the absence of such items as may have been used in previous devices or processes, e.g., for improving performance, achieving ease and/or reducing cost of implementation. Rather, as the following claims reflect, inventive aspects lie in less than all features of any single foregoing disclosed embodiment.

## Claims

1. An automatic guided vehicle (AGV) coupling system comprising:
a first AGV having a first convex coupling and a first concave coupling wherein the first convex coupling and the first concave coupling are positioned on a side wall of the first AGV at a predetermined height; and
a second AGV having a second convex coupling and a second concave coupling wherein the second convex coupling and the second concave coupling are positioned on a side wall of the second AGV at the predetermined height;
wherein the first convex coupling is releasably inserted in the second concave coupling and the second convex coupling is releasably inserted into the first concave coupling.

2. The AGV coupling system of claim 1 further comprising:
a first locking mechanism coupled in the first concave coupling; and
a second locking mechanism coupled in the second concave coupling.

3. The AGV coupling system of claim 2 further comprising:
a first slot formed in a distal end of the first convex coupling; and
a second slot formed in a distal end of the second convex coupling;
wherein the first locking mechanism includes a first T bar in the first concave coupling and a first linear actuator for rotating the first T bar and the second locking mechanism includes a second T bar in the second concave coupling and a second linear actuator for rotating the second T bar.

4. The AGV coupling system of claim 3 further comprising:
a first spring coupled to the first actuator on the first AGV for rotating the first T bar; and
a second spring coupled to the second actuator on the second AGV for rotating the second T bar.

5. The AGV coupling system of claim 1 wherein the first convex coupling and the first concave coupling are separated by a predetermined horizontal distance and the second convex coupling and the second concave coupling are separated by the predetermined horizontal distance.

6. The AGV coupling system of claim 1 wherein an outer surface of the first convex coupling includes a first conical surface and an outer surface of the second convex coupling includes a second conical surface.

7. The AGV coupling system of claim 1 wherein an outer surface of the first convex coupling includes a first spherical surface and an outer surface of the second convex coupling includes a second conical surface.

8. The AGV coupling system of claim 1 wherein an outer surface of the first convex coupling includes a first convex cylindrical surface and an outer surface of the second convex coupling includes a second convex cylindrical surface.

9. The AGV coupling system of claim 1 wherein an inner surface of the first concave coupling includes a first concave cylindrical surface and an inner surface of the second concave coupling includes a second concave cylindrical surface.

10. The AGV coupling system of claim 1 further comprising:
a first data coupling on the side wall of the first AGV; and
a second data coupling on the side wall of the second AGV.

11. The AGV coupling system of claim 10 wherein the first data coupling is centered between the first convex coupling and the first concave coupling and the second data coupling is centered between the second convex coupling and the second concave coupling.

12. The AGV coupling system of claim 1 wherein the first AGV has a first plurality of wheels and the second AGV has a second plurality of wheels and when the first convex coupling is inserted in the second concave coupling and the second convex coupling is inserted into the first concave coupling the first plurality of wheels is out of alignment with the second plurality of wheels.

13. The AGV coupling system of claim 1 further comprising:
a third AGV having a third convex coupling and a third concave coupling wherein the third convex coupling and the third concave coupling are positioned on a side wall of the third AGV at the predetermined height;
a fourth convex coupling and a fourth concave coupling on the second side wall of the second AGV;
wherein the third convex coupling is releasably inserted in the fourth concave coupling and the third convex coupling is releasably inserted into the fourth concave coupling.

14. The AGV coupling system of claim 13 wherein the second side wall of the second AGV is adjacent to the side wall of the second AGV.

15. The AGV coupling system of claim 13 wherein the second side wall of the second AGV is on an opposite side of the second AGV from the side wall of the second AGV.
